# EUROPÄISCHE PATENTANMELDUNG

(11) **EP 1 749 496 A1**
(43) Veröffentlichungstag der Anmeldung: **07.02.2007**
(21) Anmeldenummer: 05017089.3
(22) Anmeldetag: 05.08.2005
(51) Int. Cl.: A61C 1/05, A61C 1/18

(54) **Medizinischer Kleinstmotor**

(71) Anmelder: W & H Dentalwerk Bürmoos GmbH, 5111 Bürmoos (AT)
(72) Erfinder: Schatz, Norbert, 5111 Bürmoos (AT); Schmiedlechner, Karl, 5121 Ostermiething (AT); Gollackner, Alois P., 5303 Thalgau (AT); Harfmann, Tobias, 5111 Bürmoos (AT); Perwein, Wolfgang, 5112 Lamprechtshausen (AT)

(57) **Zusammenfassung**

Die vorliegende Erfindung betrifft einen medizinischen Kleinstmotor (1) mit einer im Inneren verlaufenden Bohrung (5) zur Leitung einer Behandlungsflüssigkeit. Um eine für den Anwender einfache Möglichkeit zu schaffen, mit einem Kleinstmotor (1) ohne Vorrichtung zur Weiterleitung von Behandlungsflüssigkeit Behandlungen mit Behandlungsflüssigkeit durchzuführen zu können, wird erfindungsgemäß vorgeschlagen, den Kleinstmotor (1) mit einer Anschlussvorrichtung (8) und Sperrvorrichtung (9) auszustatten, so dass der Anwender die Sperrvorrichtung (9) durch die Anschlussvorrichtung (8) ersetzen kann. Ist die Anschlussvorrichtung (8) auf dem Kleinstmotor (1) befestigt, so entsteht für die Behandlungsflüssigkeit ein durchgehender Fließweg durch die Bohrung (5), über die Öffnungen (6) und (18) in die Bohrung (14) der Anschlussvorrichtung (8) und das Röhrchen (36). Mit Röhrchen (36) ist ein Schlauch verbindbar, der die Behandlungsflüssigkeit außerhalb des Kleinstmotors (1) bis zur Präparationsstelle leitet. Ist die Sperrvorrichtung (9) mit dem Kleinstmotor (1) verbunden, so wird Bohrung (5) abgedichtet und die Behandlung kann ohne Behandlungsflüssigkeit durchgeführt werden.

## Beschreibung

Die vorliegende Erfindung betrifft einen medizinischen Kleinstmotor mit einer im Inneren verlaufenden Bohrung zur Leitung einer Behandlungsflüssigkeit sowie mit dem Kleinstmotor verbindbare Anschluss- und Sperrvorrichtungen für eine Behandlungsflüssigkeit.

Ein derartiger Kleinstmotor, der zum Beispiel mit Druckluft betrieben werden kann und dann oft als Luftmotor bezeichnet wird, ist beispielsweise aus der DE 1 992 122 bekannt. Zur Übernahme und Weiterleitung von Behandlungsflüssigkeit weist der Luftmotor an jenem Ende, an dem er mit dem Versorgungsschlauch verbindbar ist, eine Bohrung in der Außenhülse auf. Die Bohrung verläuft über einen kurzen Abschnitt parallel zur Längsachse des Luftmotors und tritt dann radial durch die Außenhülse nach außen, wo sie über eine Passstück mit einer außerhalb des Luftmotors verlaufenden Leitung verbunden ist, in der die Behandlungsflüssigkeit zur Präparationsstelle geführt wird.

Des Weiteren sind Kleinstmotore bekannt, die keine Vorrichtung zur Weiterleitung von Behandlungsflüssigkeit aufweisen. Diese Motore stellen die einfachste Version oder das "Basismodell" einer Antriebsvorrichtung dar. Möchte der Anwender auch Behandlungen mit Behandlungsflüssigkeit durchführen, so benötigt er neben diesem Basismodell einen zweiten Kleinstmotor mit einer Vorrichtung zur Weiterleitung von Behandlungsflüssigkeit.

Der vorliegenden Erfindung liegt daher die Aufgabe zugrunde für den Anwender eine Möglichkeit zu schaffen Behandlungen mit Behandlungsflüssigkeit durchzuführen zu können, ohne dafür einen zweiten Kleinstmotor zu benötigen.

Diese Aufgabe wird gemäß der vorliegenden Erfindung durch eine Anschlussvorrichtung mit den Merkmalen des Anspruchs 1 bzw. durch eine Sperrvorrichtung mit den Merkmalen des Anspruchs 7 und einen medizinischen Kleinstmotor mit den Merkmalen des Anspruchs 11 gelöst. Besonders vorteilhafte Ausführungsformen sind in den Unteransprüchen angeführt.

Erfindungsgemäß ist der Kleinstmotor wahlweise mit einer Anschlussvorrichtung oder einer Sperrvorrichtung verbindbar, die beide über eine Befestigungsvorrichtung lösbar am Kleinstmotor angeordnet werden können. Ist die Anschlussvorrichtung auf dem Kleinstmotor befestigt, so ist eine Bohrung in der Anschlussvorrichtung mit der Bohrung, durch die die Behandlungsflüssigkeit im Inneren des Kleinstmotors fließt, verbunden, womit die Behandlungsflüssigkeit aus dem Kleinstmotor in die Anschlussvorrichtung übertreten kann. Die Bohrung in der Anschlussvorrichtung ist des Weiteren mit einer außerhalb des Kleinstmotors verlaufenden Leitung verbindbar, so dass die Behandlungsflüssigkeit - gegebenenfalls entlang eines Übertragungsinstruments - zur Behandlungsstelle geleitet werden kann. Wird die Sperrvorrichtung mit dem Kleinstmotor verbunden, so dichtet zumindest ein Dichtelement die Bohrung und die Öffnung, in der die Bohrung in der Außenfläche des Kleinstmotors endet, ab, so dass die Weiterleitung der Beharidlungsflüssigkeit unterbrochen ist. Der Anwender hat somit die Möglichkeit die Basisversion des Kleinstmotors ohne Vorrichtung zur Weiterleitung der Behandlungsflüssigkeit zu erweitern oder aufzurüsten, um so einen Kleinstmotor zu erhalten, mit dem Behandlungen mit Behandlungsflüssigkeit durchführbar sind. Des Weiteren kann der Anwender die Anschluss- und Sperrvorrichtung gegeneinander austauschen, um so Behandlungen mit oder ohne Behandlungsflüssigkeit durchführen zu können. In beiden Fällen benötigt er in vorteilhafter Weise nur einen anstatt zweier Kleinstmotore.

Damit der Übertritt der Behandlungsflüssigkeit vom Kleinstmotor in die Anschlussvorrichtung unabhängig von der Position der Bohrung in der Anschlussvorrichtung in Bezug auf die Bohrung des Kleinstmotors ist, schließt in einem bevorzugten Ausführungsbeispiel entweder an die Öffnung in der Außenfläche des Kleinstmotors oder an die Öffnung der Bohrung in der Anschlussvorrichtung eine Nut, bevorzugt eine Ringnut, an. Die beiden Bohrungen sind über die Nut miteinander verbunden, so dass die Behandlungsflüssigkeit aus der Bohrung und Öffnung des Kleinstmotors in die Ringnut eintritt und von dort in die Öffnung und Bohrung der Anschlussvorrichtung fließt.

Um einen Austritt von Behandlungsflüssigkeit während des Übertritts der Behandlungsflüssigkeit vom Kleinstmotor in die Anschlussvorrichtung zu verhindern, ist in einem weiteren Ausführungsbeispiel am Kleinstmotor und/oder an der Anschlussvorrichtung zumindest ein Dichtelement vorgesehen. Bevorzugt ist das zumindest eine Dichtelement im wesentlichen neben der Öffnung und/oder Nut des Kleinstmotors und/oder der Anschlussvorrichtung angeordnet. Das zumindest eine Dichtelement kann aus allen bekannten Dichtungen bestehen, wie zum Beispiel Schultern, Leisten oder Vorsprüngen, die wenn sie ein Teil der Anschlussvorrichtung sind, bevorzugt aus dem selben Material wie die Anschlussvorrichtung und/oder einteilig mit dieser hergestellt sind. Besonders bevorzugt ist das zumindest eine Dichtelement der Anschlussvorrichtung oder des Kleinstmotors durch zumindest einen Einstich zur Aufnahme eines Dichtrings gebildet.

Auch das zumindest eine Dichtelement der Sperrvorrichtung kann aus allen bekannten Dichtungen gebildet sein, wie zum Beispiel einem Einstich zur Aufnahme eines Dichtrings oder einer Schulter, Leisten und Vorsprüngen, die, wenn sie ein Teil der Sperrvorrichtung sind, bevorzugt aus dem selben Material wie die Sperrvorrichtung und/oder einteilig mit dieser hergestellt sind.

In einem bevorzugten Ausführungsbeispiel ist der Rahmen der Anschlussvorrichtung oder der Sperrvorrichtung so ausgebildet, dass er zumindest einen Teil der Außenfläche des Kleinstmotors kontaktiert bzw. umgreift. Die Rahmen können zum Beispiel als federnde Klammern ausgebildet sein, bevorzugt sind sie jeweils als Hülse ausgebildet. Besonders bevorzugt haben die Hülsen einen Außendurchmesser der in etwa dem Durchmesser des Gehäuses des Kleinstmotors entspricht, eine zylindrische Innenbohrung deren Innendurchmesser zumindest etwas größer als der Durchmesser der versorgungsschlauchseitigen Kupplung ist und eine als Innengewinde ausgebildete Befestigungsvorrichtung an der dem Kleinstmotor zugewandten Mantelseite der zylindrischen Innenbohrung. Diese Ausführungsform gewährleistet eine einfache und komfortable Handhabung, bei der der Anwender die Hülsen aufgrund ihres Durchmessers sicher greifen und halten und über die versorgungsschlauchseitige Kupplung schieben kann und sie anschließend mittels Drehbewegung sicher und festsitzend auf dem Kleinstmotor befestigt. Schließt, wie oben beschrieben, an die Öffnung für die Behandlungsflüssigkeit des Kleinstmotors oder der Anschlussvorrichtung eine Nut an, so vereinfacht sich die Handhabung für den Anwender zusätzlich, da die beiden Öffnungen, sobald die Anschlussvorrichtung auf dem Kleinstmotor befestigt ist, über die Nut miteinander verbunden sind und der Anwender beim Festschrauben der Anschlussvorrichtung somit nicht auf die Position und Anordnung der beiden Öffnungen zueinander zu achten hat.

In einem weiteren Ausführungsbeispiel sind die Anschluss- und die Sperrvorrichtung aus Kunststoff gefertigt. Bevorzugt wird dabei Kunststoff verwendet, der Temperaturen von zumindest 132°C widersteht, so dass, wenn der Kleinstmotor sterilisiert wird, die Anschluss- oder Sperrvorrichtung nicht vom Motor getrennt werden müssen.

Die Erfindung wird nachfolgend anhand eines bevorzugten Ausführungsbeispiels und Bezug nehmend auf die beigefügten Zeichnungen erläutert:
Figur 1 zeigt den erfindungsgemäßen medizinischen Kleinstmotor, die Anschluss- und die Sperrvorrichtung in einer perspektivischen Ansicht.
Figur 2A zeigt das versorgungsschlauchseitige Ende des erfindungsgemäßen medizinischen Kleinstmotors und die darauf befestigte Sperrvorrichtung in einer teilweisen Schnittdarstellung.
Figur 2B zeigt das versorgungsschlauchseitige Ende des erfindungsgemäßen medizinischen Kleinstmotor und die darauf befestigte Anschlussvorrichtung in einer teilweisen Schnittdarstellung.

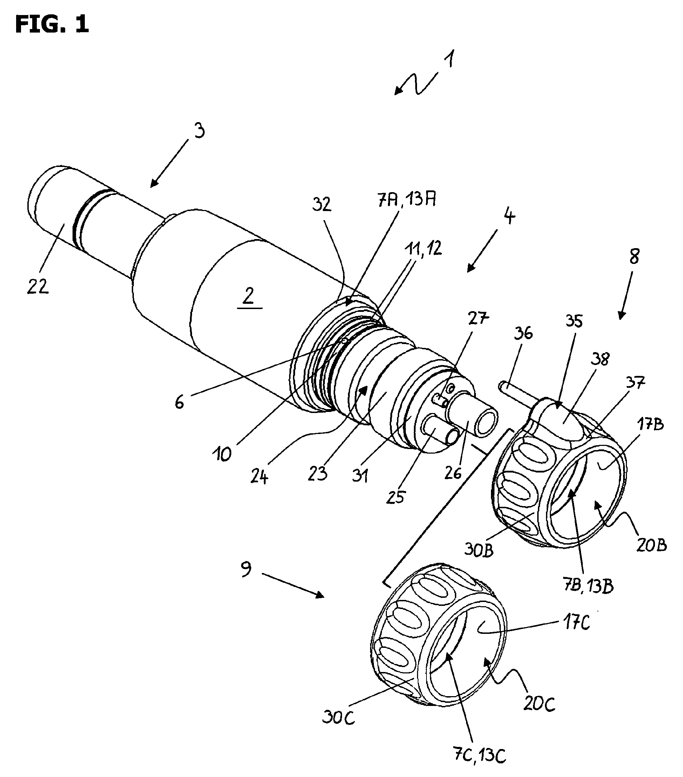

Figur 1 zeigt einen mit unter Druck stehendem Gas, bevorzugt Druckluft betriebenen medizinischen Kleinstmotor 1. Seine Außenfläche umfasst das Rotorgehäuse 2, die Mantelfläche der werkzeugseitigen Kupplungsvorrichtung 3 und die Mantelfläche der versorgungsschlauchseitigen Kupplungsvorrichtung 4. Im Rotorgehäuse 2 ist ein drehbar, bevorzugt in Kugellagern gelagerter und durch Zufuhr von Druckgas in Rotation versetzbarer Rotor angeordnet. Der Rotor umfasst in bekannter Weise mehrere Nuten, in denen jeweils eine Lamelle oder eine Flügel aufgenommen ist. Jede Lamelle ist radial nach innen und außen beweglich in der Nut angeordnet, so dass sie während einer Umdrehung des Rotors immer die Wand der Rotorkammer kontaktiert. Die werkzeugseitige Kupplungsvorrichtung 3 dient zur Verbindung des Rotors mit einem anzutreibenden Werkzeug, zum Beispiel einem dentalen Bohrer oder einem Prophy-Cup zum Entfernen von Zahnbelägen, die versorgungsschlauchseitige Kupplungsvorrichtung 4 dient der Verbindung des Kleinstmotors 1 mit einem Versorgungsschlauch, der die Druckluft und eine Behandlungsflüssigkeit zum Kleinstmotor 1 leitet.

Die werkzeugseitige Kupplungsvorrichtung 3 umfasst einen Kupplungszapfen 22, der, wenn der Kleinstmotor 1 mit einem Hand- oder Winkelstück verbunden wird, in eine Aufnahme des Hand- oder Winkelstücks einsteckbar ist. Das Hand- oder Winkelstück wird über eine bekannte Steck-, Dreh-, Schraub- oder Schnellkupplung an den Kleinstmotor 1 gekuppelt. Im Inneren des Kupplungszapfens 22 befindet sich die mit dem Rotor verbundene Rotorwelle, die die Drehbewegung des Rotors auf eine Antriebswelle des Hand- oder Winkelstücks und das damit verbundene Werkzeug überträgt.

Die versorgungsschlauchseitige Kupplungsvorrichtung 4 wird von einem Kupplungszapfen 24 gebildet, dessen Außendurchmesser, entsprechend dem Außendurchmesser des Kupplungszapfens 22, geringer ist als der Außendurchmesser des Rotorgehäuses 2 des Kleinstmotors 1. Die versorgungsschlauchseitige Kupplungsvorrichtung 4 umfasst ein Außengewinde 23 zur Verschraubung mit einem Innengewinde des Versorgungsschlauchs sowie mehrere Anschlüsse und Leitungen zur Übernahme von über den Versorgungsschlauch zugeführten Medien. Dazu gehören zum Beispiel eine erste Leitung 25, die die Druckluft in die Rotorkammer und zum Rotor leitet, eine zweite Leitung 26, über die die Druckluft aus der Rotorkammer abgeleitet wird, und eine dritte Leitung 27 für eine Behandlungsflüssigkeit, zum Beispiel Wasser oder eine physiologische Kochsalzlösung, die auf die Behandlungsstelle abgegeben wird. Die Behandlungsflüssigkeit dient der Kühlung und dem Spülen der Behandlungsstelle und dem Abtransport von Partikeln während der Behandlung.

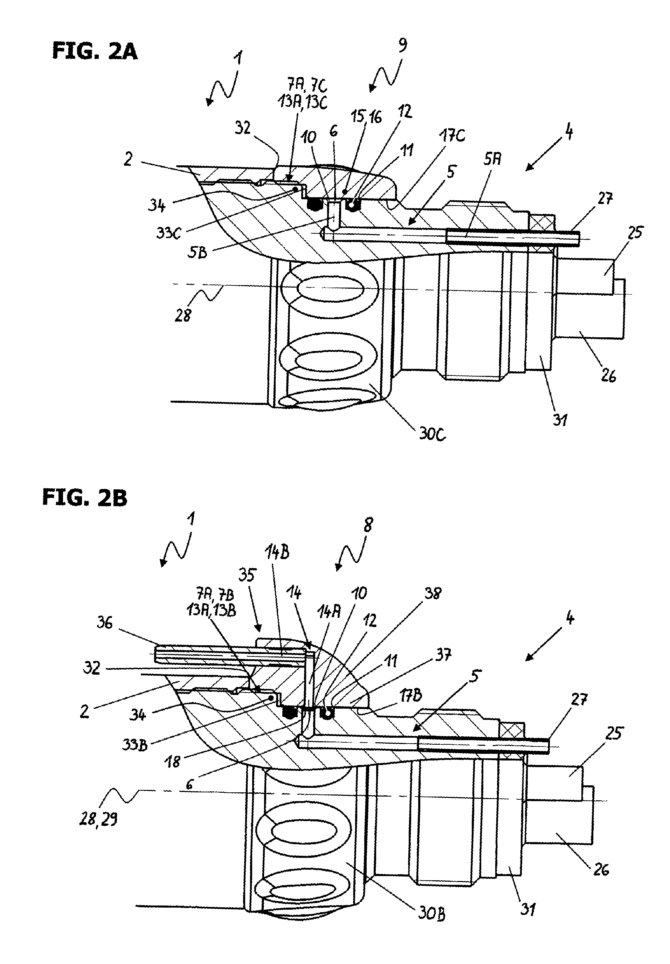

Wie aus den Figuren 2A und 2B ersichtlich ist Leitung 27 in einen ersten Endabschnitt 5A einer Bohrung 5 des Kleinstmotors 1 aufgenommen, zum Beispiel eingeklebt oder eingepresst. Wenn der Versorgungsschlauch mit dem Kleinstmotor 1 verbunden ist, ist der erste Endabschnitt 5A über die Leitung 27 an eine Flüssigkeitsleitung des Versorgungsschlauchs angeschlossen, so dass die Behandlungsflüssigkeit in den Mikromotor 1 übertreten kann. Ein zweiter Endabschnitt 5B der Bohrung 5 ist gewinkelt zum ersten Endabschnitt 5A angeordnet, wobei der erste Endabschnitt 5A im wesentlich parallel und der zweite Endabschnitt 5B im wesentlichen radial zur Längsachse 28 des Kleinstmotors verläuft. Der zweite Endabschnitt 5B endet in einer Öffnung 6 an der Außenfläche des Kleinstmotors 1. Eine Flachdichtung 31 dichtet die Schnittstelle zwischen der versorgungsschlauchseitigen Kupplungsvorrichtung 4 und dem Versorgungsschlauch ab.

An die Öffnung 6 schließt eine Nut 10 an, die bevorzugt als Ringnut ausgebildet ist und rund um die Außenfläche des Mikromotors 1 bzw. der versorgungsschlauchseitigen Kupplungsvorrichtung 4 verläuft. Nut 10 verbindet die Öffnung 6 der Bohrung 5 für die Behandlungsflüssigkeit des Kleinstmotors 1 mit der Öffnung 18 der Bohrung 14 der Anschlussvorrichtung 8, wenn diese am Kleinstmotor 1 befestigt ist.

Seitlich neben der Nut 10 und der Öffnung 6 sind zwei Einstiche 11 vorgesehen, in denen jeweils ein Dichtring 12 in Form eines O-Rings aufgenommen ist. Die Tiefe der Einstiche 11 ist dabei so bemessen, dass die Dichtringe 12 aus den Einstichen 11 herausragen. Die Einstiche 11 und Dichtringe 12 dienen als Dichtelement das, wenn die Anschlussvorrichtung 8 oder die Sperrvorrichtung 9 mit dem Kleinstmotor 1 verbunden ist, ein Austreten von Behandlungsflüssigkeit an der Schnittstelle zwischen dem Kleinstmotor 1 und der Anschlussvorrichtung 8 oder der Sperrvorrichtung 9 verhindert (siehe Figuren 2A, 2B).

Auf das Dichtelement folgt eine Befestigungsvorrichtung 7A zur wahlweisen, lösbaren Befestigung der Anschlussvorrichtung 8 oder der Sperrvorrichtung 9 auf dem Kleinstmotor 1. Befestigungsvorrichtung 7A kann jede bekannte Form einer Verbindungs- und Befestigungsvorrichtung umfassen, zum Beispiel ein Steck-, Dreh- oder Klemmvorrichtung. Bevorzugt ist sie als Schraubverbindung mit einem um die zylindrische Außenfläche des Kleinstmotors 1 verlaufenden Außengewinde 13A ausgebildet. Die Befestigungsvorrichtung 7A ist so ausgebildet, dass sobald die Anschlussvorrichtung 8 oder Sperrvorrichtung 9 am Kleinstmotor befestigt ist, zumindest ein Teil der Anschlussvorrichtung 8 oder Sperrvorrichtung 9 die Öffnung 6 abdeckt.

Öffnung 6, die Einstiche 11 und die Befestigungsvorrichtung 7A sind in einem an den versorgungsschlauchseitigen Kupplungsvorrichtung 4 anschließenden Abschnitt des Kleinstmotors 1 angeordnet bzw. als Teil der versorgungsschlauchseitigen Kupplungsvorrichtung 4 ausgebildet. Der Außendurchmesser dieses Abschnitts bzw. der versorgungsschlauchseitigen Kupplungsvorrichtung 4 ist geringer als der Außendurchmesser des anschließenden Rotorgehäuses 2, so dass eine Schulter 32 das Gehäuse 2 von der versorgungsschlauchseitigen Kupplungsvorrichtung 4 und dem daran anschließenden Abschnitt mit der Öffnung 6, den Einstichen 11 und der Befestigungsvorrichtung 7A trennt. Ist der Außendurchmesser der Rahmen 30B der Anschlussvorrichtung 8 bzw. der Rahmen 30C der Sperrvorrichtung 9 gleich oder nur geringfügig größer als der Außendurchmesser des Gehäuses 2, so ragt die am Kleinstmotor 1 befestigte Anschlussvorrichtung 8 oder Sperrvorrichtung 9 nicht oder nur wenig über das Gehäuse 2 hinweg und stört damit den Anwender bei der Behandlung nicht.

Die wahlweise mit dem Kleinstmotor 1 verbindbare Anschlussvorrichtung 8 oder Sperrvorrichtung 9 haben, wie insbesondere in Figur 1 erkennbar ist, in vielen Merkmalen einen ähnlichen oder gleichen Aufbau: Sie bestehen aus einem Rahmen 30B, 30C der als Hülse mit einer zylindrischen Innenbohrung 20B, 20C ausgebildet ist. An der inneren Mantelfläche 17B, 17C ist eine Befestigungsvorrichtung 7B, 7C zur lösbaren Befestigung am Kleinstmotor 1 vorgesehen. Die Befestigungsvorrichtungen 7B, 7C können jede bekannte Form einer Verbindungs- und Befestigungsvorrichtung umfassen, zum Beispiel ein Steck-, Dreh- oder Klemmvorrichtung. Bevorzugt sind sie als Schraubverbindungen mit einem um die zylindrische Innenfläche 17B, 17C verlaufenden Innengewinde 13B, 13C ausgebildet.

Bevorzugt entspricht der Außendurchmesser der Rahmen 30B, 30C in etwa dem Durchmesser des Rotorgehäuses 2 des Kleinstmotors 1, so dass die am Kleinstmotor 1 befestigte Anschlussvorrichtung 8 oder Sperrvorrichtung 9 nicht oder nur wenig über das Gehäuse 2 hinwegragt. Bevorzugt sind die Innendurchmesser der zylindrischen Innenbohrungen 20B, 20C etwas größer als der Außendurchmesser der versorgungsschlauchseitigen Kupplung 4, so dass sie zum Befestigen in einfacher Weise auf den Kleinstmotor 1 aufgeschoben werden können. Da die Anschlussvorrichtung 8 und die Sperrvorrichtung 9 vollständig über den Kleinstmotor 1 geschoben werden, kommt es in vorteilhafter Weise zu keiner Verlängerung des Handstück-Motor-Versorgungsschlauch-Ensembles.

Anschlussvorrichtung 8 oder Sperrvorrichtung 9 können aus Metall oder aus Kunststoff gefertigt sein. Bevorzugt wird dabei Kunststoff verwendet, der Temperaturen von zumindest 132°C widersteht, so dass beide Vorrichtungen wiederholten Sterilisationen, insbesondere Dampfsterilisationen, widerstehen.

Anschlussvorrichtung 8 oder Sperrvorrichtung 9 und insbesondere ihre Rahmen 30B, 30C können an ihrer Außenseite ein Griffmuster aufweisen, das die Handhabung der beiden Vorrichtungen erleichtert.

In Figur 2A ist die über die Befestigungsvorrichtungen 7A, 7C am Kleinstmotor 1 befestigte Sperrvorrichtung 9 dargestellt. Die innere Mantelfläche 17C der Sperrvorrichtung 9 umfasst zumindest ein Dichtelement 15 und die als Gewinde 13C ausgebildete Befestigungsvorrichtung 7C, die in einem Rücksprung 33C angeordnet ist. Gewinde 13A des Kleinstmotors 1 sitzt auf einer Stufe 34, die gegenüber dem Gehäuse 2 abgesenkt ist, wodurch Schulter 32 entsteht. Ist die Sperrvorrichtung 9 auf dem Kleinstmotor 1 befestigt, so ist Stufe 34 in Rücksprung 33C aufgenommen. Die durch den Rücksprung 33 verringerte Wandstärke des Rahmens 30C entspricht in etwa der Höhe der Schulter 32, so dass die Sperrvorrichtung 9 kaum über das Gehäuse 2 des Kleinstmotors 1 ragt.

Dichtelement 15 ist als Schulter 16 ausgebildet und liegt plan auf einem Teil der Außenfläche des Mikromotors 1 auf. Schulter 16 deckt die Öffnung 6, den zweiten Endabschnitt 5B der Bohrung 5 und die als Ringkanal ausgeformte und rund um den Kleinstmotor 1 verlaufenden Nut 10 ab. Für eine verbesserte Dichtwirkung überdeckt Schulter 16 bevorzugt auch die beiden Dichtringe 12 und presst sie in die Einstiche 11. Dichtelement 15 und das Dichtelement des Kleinstmotors 1, bestehend aus den Einstichen 11 und den Dichtringen 12, verhindern somit den Weitertransport von in die Bohrung 5 fließender Behandlungsflüssigkeit. Trägt der Kleinstmotors 1 keine Dichtelemente zur Abdichtung der Öffnung 6 und der Nut 10, so ist es für eine zuverlässige Dichtung durch die Sperrvorrichtung 9 vorteilhaft, wenn das Dichtelement 15 durch zumindest einen Dichtring gebildet ist, der in einer Nut der Sperrvorrichtung 9 aufgenommen ist (entsprechend dem Einstich 11 und dem Dichtring 12).

Der Aufbau der Anschlussvorrichtung 8 ähnelt dem Aufbau der Sperrvorrichtung 9: Die innere Mantelfläche 17B der Anschlussvorrichtung 8 umfasst die als Gewinde 13B ausgebildete Befestigungsvorrichtung 7B, die in einem Rücksprung 33B angeordnet ist. Ist die Anschlussvorrichtung 8 auf dem Kleinstmotor 1 befestigt, so ist Stufe 34 des Kleinstmotors 1 in Rücksprung 33B aufgenommen. Die durch den Rücksprung 33B verringerte Wandstärke des Rahmens 30B entspricht in etwa der Höhe der Schulter 32, so dass die Anschlussvorrichtung 8 kaum über das Gehäuse 2 des Kleinstmotors 1 ragt.

Abweichend von Sperrvorrichtung 9 umfasst die Anschlussvorrichtung 8 eine über den Außenmantel des Rahmens 30B hinausragende Auskragung 35 (siehe auch Figur 1), in der Bohrung 14 angeordnet ist. Auskragung 35 besitzt eine Basis 37, an der sie mit dem Rahmen 30B verbunden ist, und einen Körper 38. Die Länge der Basis 37 entspricht in etwa der Länge des Rahmens 30B. Die Breite der Basis 37 beträgt etwa 1/8 bis 1/12 der Außenfläche des Rahmens 30B. Körper 38 hat eine sich von der Basis 37 verjüngende, schmäler werdende Form. Dieser Aufbau gewährleistet, dass die Auskragung 35 den Anwender bei der Behandlung kaum behindert.

Bohrung 14 besteht aus einem ersten Abschnitt 14A und einem zweiten Abschnitt 14B, die gewinkelt, bevorzugt in einem Winkel von etwa 90°, zueinander angeordnet sind. Abschnitt 14A ist im Wesentlichen radial zur Mittelachse 29 der Anschlussvorrichtung 8 angeordnet, während Abschnitt 14B ist im Wesentlichen parallel zur Mittelachse 29 verläuft. Abschnitt 14A der Bohrung 14 endet in einer Öffnung 18 in der dem Kleinstmotor 1 zugewandten Mantelfläche 17B. Im zweiten Abschnitt 14B ist ein Metall- oder Kunststoffröhrchen 36 aufgenommen, zum Beispiel eingeklebt, eingeschraubt oder eingepresst. Alternativ kann Röhrchen 36 auch einteilig mit dem Rahmen 30 B hergestellt werden.

Um eine einfache Handhabung zu ermöglichen, ist zumindest ein Teil der Bohrung 14 oder der die Bohrung 14 umfassenden Auskragung 35 unlösbar mit der Befestigungsvorrichtung 7B verbunden bzw. einteilig mit der Befestigungsvorrichtung 7B hergestellt.

Ist die Anschlussvorrichtung 8, wie in Figur 2B dargestellt, auf dem Kleinstmotor 1 befestigt, so entsteht für die Behandlungsflüssigkeit ein durchgehender Fließweg durch die Bohrung 5 des Kleinstmotors 1, über die Öffnungen 6 und 18 in die Bohrung 14 der Anschlussvorrichtung 8 und das Röhrchen 36. Mit Röhrchen 36 ist ein Schlauch verbindbar, der die Behandlungsflüssigkeit außerhalb des Kleinstmotors 1 bis zur Präparationsstelle leitet. Da die Anschlussvorrichtung 8 und die Bohrung 14 auf bzw. über der Öffnung 6 des Kleinstmotors 1 angeordnet sind, insbesondere die Öffnung 6 und die Öffnung 18 in der selben Schnittebene quer oder längs durch den Motor angeordnet sind, können die beiden Bohrungen 5, 14 in vorteilhafter Weise direkt miteinander verbunden werden.

Damit der Übertritt der Behandlungsflüssigkeit vom Kleinstmotor 1 in die Anschlussvorrichtung 8 unabhängig von der Position der Bohrung 14 in Bezug auf die Bohrung 5 ist, schließt an die Öffnung 6 in der Außenfläche des Kleinstmotors 1 eine Nut 10, bevorzugt eine Ringnut, an. Die beiden Bohrungen 5, 14 sind über die Nut 10 miteinander verbunden, so dass die Behandlungsflüssigkeit aus der Bohrung 5 und Öffnung 6 des Kleinstmotors 1 in die Ringnut 10 eintritt und von dort in die Öffnung 18 und Bohrung 14 der Anschlussvorrichtung 8 fließt. Alternativ kann die Nut auch in der Mantelfläche 17B vorgesehen sein.

Um einen Austritt von Behandlungsflüssigkeit während des Übertritts der Behandlungsflüssigkeit vom Kleinstmotor 1 in die Anschlussvorrichtung 8 zu verhindern, ist am Kleinstmotor 1 zumindest ein Dichtelement vorgesehen, das bevorzugt im wesentlichen neben der Öffnung 6 und/oder Nut 10 des Kleinstmotors 1 angeordnet ist. Das zumindest eine Dichtelement besteht aus zwei Einstichen 11 zur Aufnahme je eines Dichtrings 12. Alternativ kann das Dichtelement, das insbesondere wiederum aus zwei Einstichen zur Aufnahme je eines Dichtrings besteht, auch in der Mantelfläche 17B vorgesehen sein.

Die Erfindung ist nicht auf das beschriebene Ausführungsbeispiel beschränkt, sondern umfaßt alle Ausführungsmöglichkeiten, die das prinzipielle, sinngemäße Funktionsprinzip der Erfindung nicht verändern. So umfasst die Erfindung nicht nur medizinische Kleinstmotore, die mit einem unter Druck stehenden Gas betrieben werden, sondern ist auch für medizinischen Kleinstmotore anwendbar, die mit anderen Arten von Energie angetrieben werden, insbesondere für Elektromotore.

## Patentansprüche

1. Anschlussvorrichtung (8) zur Überleitung einer im Inneren eines medizinischen Kleinstmotors (1) geleiteten Behandlungsflüssigkeit (1) in eine außerhalb des Kleinstmotors (1) angeordneten Leitung mit einem zumindest einen Teil der Außenfläche des Kleinstmotors (1) kontaktierenden Rahmen (30B), mit einer Bohrung (14), die, wenn die Anschlussvorrichtung (8) an dem Kleinstmotor (1) befestigt ist, mit einer Bohrung (5) zur Leitung der Behandlungsflüssigkeit im Inneren des Kleinstmotors (1) verbunden ist und die mit einer außerhalb des Kleinstmotors (1) angeordneten Leitung verbindbar ist, und mit einer Befestigungsvorrichtung (7B) zur lösbaren Befestigung der Anschlussvorrichtung (8) am Kleinstmotor (1).

2. Anschlussvorrichtung (8) nach Anspruch 1, **dadurch gekennzeichnet, dass** die Bohrung (14) einen ersten Abschnitt (14A) und einen zweiten Abschnitt (14B) umfasst, die zueinander gewinkelt angeordnet sind.

3. Anschlussvorrichtung (8) nach Anspruch 1 oder 2, **dadurch gekennzeichnet, dass** die Bohrung (14) in einer Öffnung (18) in einer dem Kleinstmotor (1) zugewandten Mantelfläche (17B) der Anschlussvorrichtung (8) endet und in der Mantelfläche (17B) eine an die Öffnung (18) anschließende Nut vorgesehen ist.

4. Anschlussvorrichtung (8) nach einem der vorhergehenden Ansprüche, **gekennzeichnet durch**
zumindest ein Dichtelement, das, wenn die Anschlussvorrichtung (8) mit dem Kleinstmotor (1) verbunden ist, ein Austreten von Behandlungsflüssigkeit an der Schnittstelle zwischen dem Kleinstmotor (1) und der Anschlussvorrichtung (8) verhindert.

5. Anschlussvorrichtung (8) nach Anspruch 5, **dadurch gekennzeichnet, dass** das Dichtelement durch zumindest eine Schulter oder Leiste oder zumindest einen Vorsprung gebildet ist.

6. Anschlussvorrichtung (8) nach Anspruch 5, **dadurch gekennzeichnet, dass** das Dichtelement durch zumindest eine Nut in der Mantelfläche (17B) und einen darin aufgenommenen Dichtring gebildet ist.

7. Sperrvorrichtung (9) zum Abdichten einer in einer Außenfläche eines Kleinstmotors (1) endenden Bohrung (5) zur Leitung von Behandlungsflüssigkeit im Inneren des Kleinstmotors (1) mit einem zumindest einen Teil der Außenfläche des Kleinstmotors (1) kontaktierenden Rahmen (30C), einer Befestigungsvorrichtung (7C) zur lösbaren Befestigung der Sperrvorrichtung (9) am Kleinstmotor (1), und mit zumindest einem Dichtelement (15), das, wenn die Sperrvorrichtung (9) mit dem Kleinstmotor (1) verbunden ist, ein Austreten von Behandlungsflüssigkeit aus der Bohrung (5) verhindert.

8. Sperrvorrichtung (9) nach Anspruch 7, **dadurch gekennzeichnet, dass** das zumindest eine Dichtelement (15) durch eine Schulter (16) gebildet ist, die, wenn die Sperrvorrichtung (9) mit dem Kleinstmotor (1) verbunden ist, die Öffnung (6) der Bohrung (5) und/oder einer an die Öffnung (6) anschließenden Nut (10) abdichtet.

9. Sperrvorrichtung (9) nach Anspruch 7, **dadurch gekennzeichnet, dass** das zumindest eine Dichtelement (15) durch zumindest eine Nut und einen darin aufgenommenen Dichtring oder zumindest eine Leiste oder zumindest einen Vorsprung gebildet ist.

10. Anschlussvorrichtung (8) oder Sperrvorrichtung (9) nach einem der vorhergehenden Ansprüche 1 - 9, **dadurch gekennzeichnet, dass**
der Rahmen (30B) der Anschlussvorrichtung (8) oder der Rahmen (30C) der Sperrvorrichtung (9) als Hülse mit einer zylindrischen Innenbohrung (20B, 20C) ausgebildet ist.

11. Medizinischer Kleinstmotor (1) mit einem Gehäuse (2), in dem ein drehbar gelagerter und durch Zufuhr von Energie in Rotation versetzbarer Rotor angeordnet ist, einer werkzeugseitigen Kupplungsvorrichtung (3) zur Verbindung des Rotors mit einem anzutreibenden Werkzeug, einer versorgungsschlauchseitigen Kupplungsvorrichtung (4) zur Verbindung des Kleinstmotors (1) mit einem Versorgungsschlauch, der die Energie zum Antrieb des Rotors und eine Behandlungsflüssigkeit zum Kleinstmotor (1) leitet, und einer Bohrung (5) zur Weiterleitung der Behandlungsflüssigkeit, die, wenn der Versorgungsschlauch mit dem Kleinstmotor (1) verbunden ist, mit ihrem ersten Endabschnitt (5A) an eine Flüssigkeitsleitung des Versorgungsschlauchs anschließt, und deren zweiter Endabschnitt (5B) an einer Außenfläche des Kleinstmotors (1) endet, **gekennzeichnet durch**
eine Befestigungsvorrichtung (7A) zur wahlweisen, lösbaren Befestigung einer Anschlussvorrichtung (8) nach einem der Ansprüche 1 - 6 oder einer Sperrvorrichtung (9) einem der Ansprüche 7 - 10 auf dem Kleinstmotor (1).

12. Kleinstmotor (1) nach Anspruch 11, **dadurch gekennzeichnet, dass**
die Bohrung (5) an der Außenfläche des Kleinstmotors (1) in einer Öffnung (6) endet und dass an die Öffnung (6) eine Nut (10) in der Außenfläche des Kleinstmotors (1) anschließt.

13. Kleinstmotor (1) nach Anspruch 11 oder 12, **gekennzeichnet durch**
zumindest ein Dichtelement, das, wenn die Anschlussvorrichtung (8) oder die Sperrvorrichtung (9) mit dem Kleinstmotor (1) verbunden ist, ein Austreten von Behandlungsflüssigkeit an der Schnittstelle zwischen dem Kleinstmotor (1) und der Anschlussvorrichtung (8) oder der Sperrvorrichtung (9) verhindert, wobei das Dichtelement bevorzugt **durch** zumindest einen Einstich (11) zur Aufnahme eines Dichtrings (12) gebildet ist.

14. Kleinstmotor (1) nach einem der vorhergehenden Ansprüche 11 - 13, **dadurch gekennzeichnet, dass**
die Befestigungsvorrichtung (7A) und / oder die Öffnung (6) und / oder das Dichtelement in einem Abschnitt des Kleinstmotors (1) angeordnet sind, dessen Außendurchmesser geringer ist als der Außendurchmesser des Gehäuses (2).

15. Kleinstmotor (1) oder Anschlussvorrichtung (8) oder Sperrvorrichtung (9) nach einem der vorhergehenden Ansprüche, **dadurch gekennzeichnet, dass**
die Befestigungsvorrichtung (7A, 7B, 7C) als Schraubverbindung mit einem um die zylindrische Außenfläche des Kleinstmotors (1) und um die Mantelfläche (17B, 17C) der Anschlussvorrichtung (8) oder Sperrvorrichtung (9) verlaufenden Gewinde (13A, 13B, 13C) ausgebildet ist.
